# EUROPEAN PATENT APPLICATION

(11) **EP 2 980 012 A1**
(43) Date of publication of application: **03.02.2016**
(21) Application number: 13880633.6
(22) Date of filing: 19.12.2013
(51) Int. Cl.: B67D 1/07, B67D 1/08, B67D 1/14

(54) **WATER SERVER**

(30) Priority: 26.03.2013 JP 2013063771
(71) Applicant: Kabushiki Kaisha Cosmo Life, Kakogawa-shi Hyogo 675-0032 (JP)
(72) Inventor: ORITA Yoshinori, Kakogawa-shi Hyogo 675-0068 (JP)
(74) Representative: Grünecker Patent- und Rechtsanwälte PartG mbB
(86) International application number: PCT/JP2013/084073
(87) International publication number: WO 2014/155871

(57) **Abstract**

A water dispenser is provided in which water leakage can be prevented, for which the costs can be reduced, and which can be kept hygienic. The water dispenser includes a cold water tank (2), a first water level sensor (3) configured to detect the water level in the cold water tank (2), a cold water tank water supply pipe (4) configured such that when the water level detected by the first water level sensor (3) has fallen, drinking water is introduced into the cold water tank (2) through the cold water tank water supply pipe (4), a buffer tank (6), a second water level sensor (7) configured to detect the water level in the buffer tank (6), a buffer tank water supply pipe (8) configured such that when the water level detected by the second water level sensor (7) has fallen, drinking water is introduced into the buffer tank (6) through the buffer tank water supply pipe (8), an atmosphere communication line (27) mounted to the cold water tank (2) such that the interior of the cold water tank (2) is maintained at atmospheric pressure, an air passage pipe (36) through which the air layer in the cold tank (2) communicates with the air layer in the buffer tank (6), and an abnormality water level sensor (34) configured to detect that the water level in the cold tank (2) has reached an abnormal level.

## Description

### TECHNICAL FIELD

The present invention relates to a water dispenser in which drinking water is supplied from a replaceable raw water container filled with drinking water such as mineral water.

### BACKGROUND ART

In the past, water dispensers were used mainly in offices and hospitals, etc. However, since interest in the safety of water or in health is growing these days, the number of water dispensers used in ordinary homes is increasing. Such a water dispenser (as disclosed in the below-identified patent document 1) is generally known in which a replaceable raw water container is placed on the top surface of a casing, and drinking water contained in the raw water container falls by gravity into a cold water tank arranged in the casing.

In the water dispenser disclosed in patent document 1, since a raw water container is placed on the top surface of a casing, when the raw water container is replaced with a new raw water container, it is necessary to lift a new raw water container filled with water to a high position. However, since a raw water container filled with water normally contains about 10 - 12 liters of water and weighs 10 kg or more, such container replacement work is very difficult for a user (especially, woman and elderly person) of the water dispenser.

In order to overcome this problem, the inventor of the present invention considered a water dispenser in which a raw water container is placed in the lower portion of a casing, and which enables a user to easily conduct container replacement work.

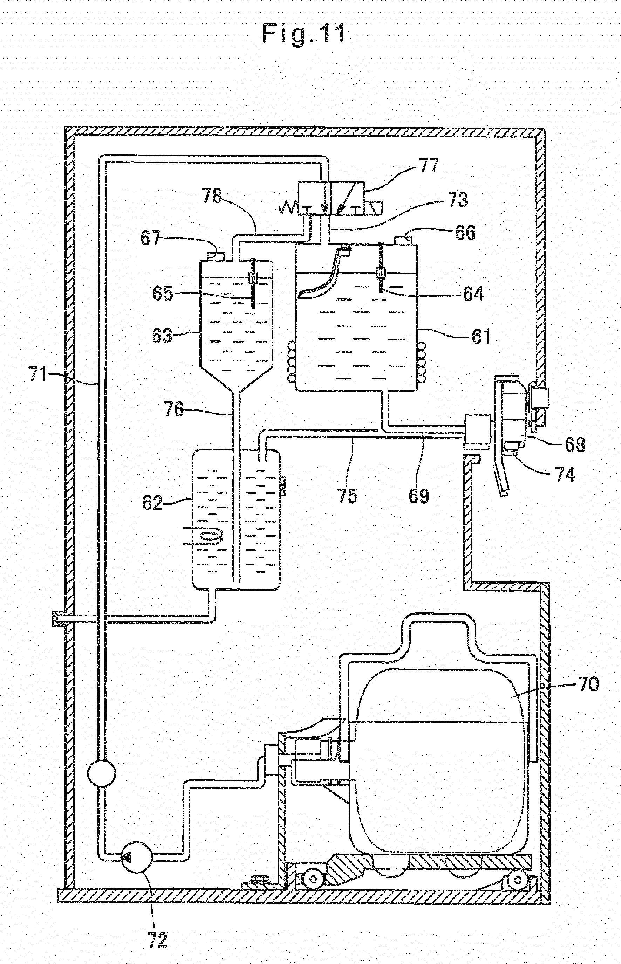

As illustrated in Fig. 11, this water dispenser includes a cold water tank 61 in which low-temperature drinking water to be discharged to outside is stored, a hot water tank 62 in which high-temperature drinking water to be discharged to outside is stored, and a buffer tank 63 in which drinking water for pushing drinking water in the hot water tank 62 to outside is stored. The cold water tank 61 and the buffer tank 63 each contains air and drinking water in two layers with the air forming the upper layer and the water forming the lower layer. The cold water tank 61 has a first water level sensor 64 attached thereto which detects the water level in the cold water tank 61, and the buffer tank 63 has a second water level sensor 65 attached thereto which detects the water level in the buffer tank 63.

The cold water tank 61 is formed with an opening 66 for atmosphere communication so that the interior of the cold water tank 61 is maintained at atmospheric pressure. The buffer tank 63 is also formed with an opening 67 for atmosphere communication so that the interior of the buffer tank 63 is maintained at atmospheric pressure. An air filter (not shown) is attached to each of the openings 66 and 67.

When a user operates a cold water cock 68, low-temperature drinking water in the cold water tank 61 is discharged to outside through a cold water discharge pipe 69 extending from the bottom surface of the cold water tank 61. At this time, the water level in the cold water tank 61 falls. When the water level detected by the first water level sensor 64 has fallen below a predetermined level, a pump 72 is activated which is attached to a pump attached pipe 71 connected to a raw water container 70, so that drinking water is introduced into the cold water tank 61 through a cold water tank water supply pipe 73.

When a user operates a hot water cock 74, high-temperature drinking water in the hot water tank 62 is discharged to outside through a hot water discharge pipe 75 extending from the top surface of the hot water tank 62. At this time, drinking water in the buffer tank 63 is introduced, due to its own weight, into the hot water tank 62 through a hot water tank water supply pipe 76, so that the water level in the buffer tank 63 falls. When the water level detected by the second water level sensor 65 has fallen below a predetermined level, a three-way valve 77 moves and further the pump 72 is activated, so that drinking water is introduced into the buffer tank 63 through a buffer tank water supply pipe 78.

### PRIOR ART DOCUMENT(S)

### PATENT DOCUMENT(S)

Patent document 1: Japanese Unexamined Patent Application Publication No. 2012-162318

### SUMMARY OF THE INVENTION

### PROBLEMS TO BE SOLVED BY THE INVENTION

After the water dispenser illustrated in Fig. 11 is used for a long period of time, the first water level sensor 64 or the second water level sensor 65 might fail to function properly. In particular, if natural mineral water containing natural minerals is used as drinking water, the separation of such minerals from drinking water might cause the first water level sensor 64 or the second water level sensor 65 to operate unstably. If such an unstable operation occurs, the water level in the cold water tank 61 or in the buffer tank 63 might continue to rise, and thus water might leak from the water dispenser.

In order to prevent this water leakage, the inventor of the present invention considered attaching an abnormality water level sensor detecting an abnormal water level to each of the cold water tank 61 and the buffer tank 63. Namely, the inventor considered attaching, separately from the first water level sensor 64, a water level sensor for detecting an abnormal level in the cold water tank 61 to the cold water tank 61, and further attaching, separately from the second water level sensor 65, a water level sensor for detecting an abnormal level in the buffer tank 63 to the buffer tank 63.

However, if such water level sensors are separately provided, the number of water level sensors used in the water dispenser is large, so that the costs for manufacturing such a water dispenser increase. Also, since an opening for atmosphere communication is formed in each of the cold water tank 61 and the buffer tank 63, the possibility that germs might go into the tanks from the atmosphere is relatively high, thus making it difficult to keep the water dispenser hygienic.

It is an object of the present invention to provide a water dispenser in which water leakage can be prevented, for which the costs can be reduced, and which can be kept hygienic.

### MEANS FOR SOLVING THE PROBLEMS

In order to achieve the above object, the present invention provides a water dispenser comprising: a first tank containing air and drinking water in two layers with the air forming an upper layer and the water forming a lower layer; a first water level sensor configured to detect a water level in the first tank; a first water supply pipe configured such that when the water level detected by the first water level sensor has fallen, drinking water is introduced into the first tank through the first water supply pipe; a second tank containing air and drinking water in two layers with the air forming an upper layer and the water forming a lower layer, and provided separately from the first tank so as to have a water level independent of the water level in the first tank; a second water level sensor configured to detect the water level in the second tank; a second water supply pipe configured such that when the water level detected by the second water level sensor has fallen, drinking water is introduced into the second tank through the second water supply pipe; an atmosphere communication line mounted to the first tank such that an interior of the first tank is maintained at atmospheric pressure; an air passage pipe through which the air layer in the first tank communicates with the air layer in the second tank; and an abnormality water level sensor configured to detect that the water level in the first tank has reached an abnormal level.

In this arrangement, even if the water level in the first tank continues to rise due to an abnormality, the abnormality water level sensor can detect the abnormality. Also, since the interior of the first tank communicates with the interior of the second tank through the air passage pipe, even if the water level in the second tank continues to rise due to an abnormality, drinking water overflowing the second tank flows into the first tank through the air passage pipe, so that the water level in the first tank rises. Therefore, even if the water level in the second tank continues to rise due to an abnormality, the abnormality water level sensor can detect the abnormality. Namely, the abnormality water level sensor of the first tank can detect not only an abnormality which causes the water level in the first tank to continue to rise, but also an abnormality which causes the water level in the second tank to continue to rise, thus making it possible to monitor both the first tank and the second tank by a single sensor, i.e., only by the abnormality water level sensor so as to prevent water leakage. As a result thereof, it is not necessary to attach an abnormality water level sensor to the second tank, thus making it possible to reduce costs. Since the air layer in the first tank communicates with the air layer in the second tank through the air passage pipe, it is not necessary to mount an atmosphere communication line to the second tank. As a result thereof, it is possible to reduce the possibility that germs might go into the water dispenser from the atmosphere, and thus to keep the water dispenser hygienic.

The present invention may be applied to the water dispenser, further comprising a hot water tank in which high-temperature drinking water to be discharged to outside is to be stored, wherein the first tank comprises a cold water tank in which low-temperature drinking water to be discharged to outside is to be stored, and wherein the second tank comprises a buffer tank arranged at a higher level than the hot water tank, and configured to store drinking water which is capable of pushing high-temperature drinking water in the hot water tank to outside when the high-temperature drinking water in the hot water tank is discharged to outside.

The water dispenser configured as above may further comprise: a pump attached pipe connected to upstream sides of the first water supply pipe and the second water supply pipe through an upper three-way valve: a raw water container connection pipe and a circulation pipe connected to an upstream side of the pump attached pipe through a lower three-way valve; and a replaceable raw water container connected to the raw water container connection pipe, wherein the hot water tank is connected to the circulation pipe, wherein the upper three-way valve is configured to switch a flow of drinking water by moving between a first connection position in which the upper three-way valve allows communication between the pump attached pipe and the first water supply pipe, while blocking communication between the pump attached pipe and the second water supply pipe, and a second connection position in which the upper three-way valve allows communication between the pump attached pipe and the second water supply pipe, while blocking communication between the pump attached pipe and the first water supply pipe, and wherein the lower three-way valve is configured to switch a flow of drinking water by moving between a raw water side connection position in which the lower three-way valve allows communication between the pump attached pipe and the raw water container connection pipe, while blocking communication between the pump attached pipe and the circulation pipe, and a circulation side connection position in which the lower three-way valve allows communication between the pump attached pipe and the circulation pipe, while blocking communication between the pump attached pipe and the raw water container connection pipe.

In this arrangement, by activating a pump with the upper three-way valve moved to the second connection position (buffer side connection position), and with the lower three-way valve moved to the circulation side connection position, it is possible to conduct a sterilization operation in which high-temperature drinking water in the hot water tank circulates through the circulation path including the buffer tank and the pump attached pipe. When the sterilization operation is started, even if the water level in the cold water tank or in the buffer tank continues to rise due to the malfunction of the upper three-way valve or of the lower three-way valve, the abnormality water level sensor detects the abnormality, thereby making it possible to prevent water leakage.

### EFFECTS OF THE INVENTION

In the water dispenser according to the present invention, the abnormality water level sensor of the first tank can detect not only an abnormality which causes the water level in the first tank to continue to rise, but also an abnormality which causes the water level in the second tank to continue to rise, thus making it possible to monitor both the first tank and the second tank by a single sensor, i.e., only by the abnormality water level sensor so as to prevent water leakage. As a result thereof, it is not necessary to attach an abnormality water level sensor to the second tank, thus making it possible to reduce costs. Since the air layer in the first tank communicates with the air layer in the second tank through the air passage pipe, it is not necessary to mount an atmosphere communication line to the second tank. As a result thereof, it is possible to reduce the possibility that germs might go into the water dispenser from the atmosphere, and thus to keep the water dispenser hygienic.

### BRIEF DESCRIPTION OF THE DRAWINGS

Fig. 1 is a sectional view of a water dispenser according to an embodiment of the present invention.
Fig. 2 is an enlarged sectional view of the water dispenser in the vicinity of the cold water tank and the buffer tank of Fig. 1.
Fig. 3 is a sectional view of the water dispenser in the vicinity of the container holder of Fig. 1, the view illustrating the state in which the container holder is out of a casing.
Fig. 4 is a sectional view of the water dispenser, the view illustrating the state in which the water level in the cold water tank of Fig. 1 has fallen, and drinking water is being introduced into the cold water tank through a cold water tank water supply pipe.
Fig. 5 is a sectional view of the water dispenser, the view illustrating the state in which the water level in the buffer water tank of Fig. 1 has fallen, and drinking water is being introduced into the buffer tank through a buffer tank water supply pipe.
Fig. 6 is a sectional view of the water dispenser, the view illustrating the state in which sterilization operation is being conducted in the water dispenser of Fig.1.
Fig. 7 is a sectional view of the water dispenser, the view illustrating the state in which a first water level sensor attached to the cold water tank of Fig. 4 has failed to function property, so that the water level in the cold water tank has continued to rise.
Fig. 8 is a sectional view of the water dispenser, the view illustrating the state in which a second water level sensor attached to the buffer tank of Fig. 5 has failed to function property, so that the water level in the cold buffer tank has continued to rise.
Fig. 9 is a sectional view of the water dispenser, the view illustrating the state in which the upper three-way valve of Fig. 6 has failed to function property, so that the water level in the cold water tank has continued to rise.
Fig. 10 is a sectional view of the water dispenser, the view illustrating the state in which the lower three-way valve of Fig. 6 has failed to function property, so that the water level in the buffer tank has continued to rise.
Fig. 11 is a sectional view of a water dispenser which the inventor of the present invention considered and exemplified.

### BEST MODE FOR CARRYING OUT THE INVENTION

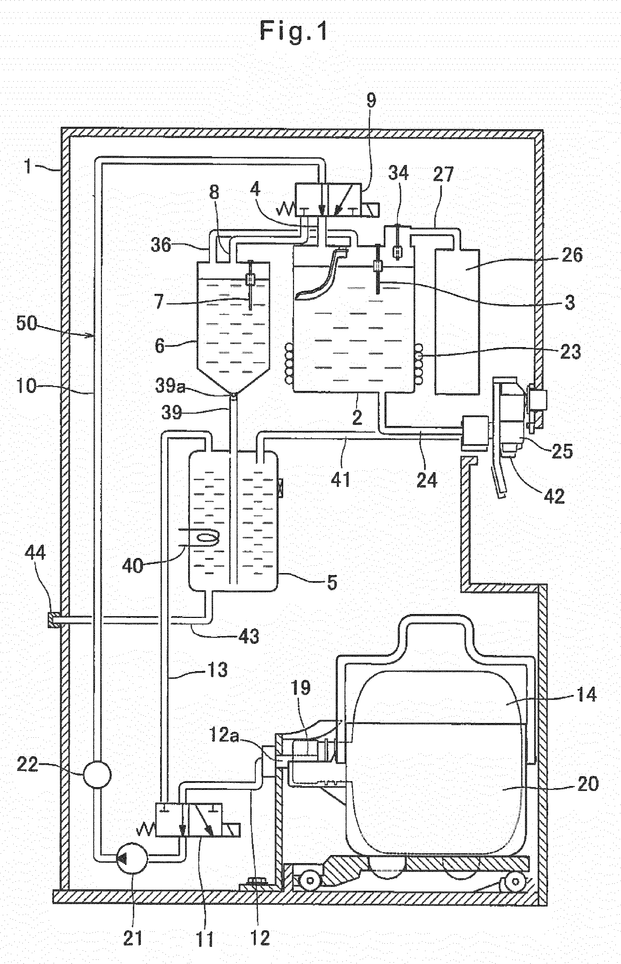

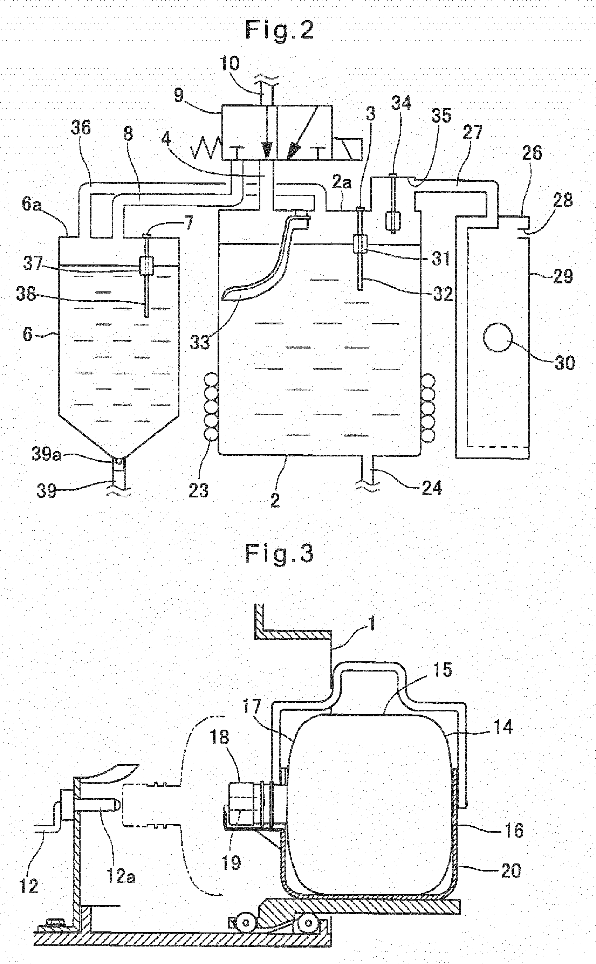

Figs. 1 and 2 illustrate a water dispenser according to the embodiment of the present invention. This water dispenser includes a casing 1, a cold water tank 2 in which low-temperature drinking water to be discharged to the outside of the casing 1 is stored, a first water level sensor 3 which detects the water level in the cold water tank 2, a cold water tank water supply pipe 4 through which drinking water is introduced into the cold water tank 2 when the water level detected by the first water level sensor 3 has fallen, a hot water tank 5 in which high-temperature drinking water to be discharged to the outside of the casing 1 is stored, a buffer tank 6 arranged at a higher level than the hot water tank 5, a second water level sensor 7 which detects the water level in the buffer tank 6, a buffer tank water supply pipe 8 through which drinking water is introduced into the buffer tank 6 when the water level detected by the second water level sensor 7 has fallen, a pump attached pipe 10 connected to the upstream sides of the cold water tank water supply pipe 4 and the buffer tank water supply pipe 8 through an upper three-way valve 9, a raw water container connection pipe 12 and a circulation pipe 13 (pipe for sterilization) connected to the upstream side of the pump attached pipe 10 through a lower three-way valve 11, and a replaceable raw water container 14 detachably connected to the raw water container connection pipe 12.

As illustrated in Fig. 3, the raw water container 14 includes a tubular hollow trunk portion 15, a bottom portion 16 connected to one end of the trunk portion 15, and a neck portion 18 connected to the other end of the trunk portion 15 through a shoulder portion 17. A water outlet 19 is formed in this neck portion 18. The trunk portion 15 of the raw water container 14 is flexibly formed so as to shrink as the amount of water remaining in the raw water container 14 decreases. The raw water container 14 is formed by blow molding of polyethylene terephthalate (PET) resin. The maximum capacity of the raw water container 14, namely, the maximum amount of drinking water the raw water container 14 can hold, is about 10 to 20 liters.

The raw water container 14 may be constituted by a bag made of resin film and including a connector bonded to the film by heat welding, etc. and having the water outlet 19, and a box, such as a corrugated paperboard box, in which this bag is received (so-called "bag-in box").

The raw water container 14 is supported by a container holder 20. The container holder 20 is supported so as to be movable in a horizontal direction between the received position (position illustrated in Fig. 1) in which the raw water container 14 is received in the casing 1, and the pulled-out position (position illustrated in Fig. 3) in which the raw water container 14 is out of the casing 1. The raw water container 14 is supported by the container holder 20 with the water outlet 19 directed horizontally.

The end portion 12a of the raw water container connection pipe 12 on the side of the raw water container 14 is fixed in position inside of the casing 1 such that, as illustrated in Fig. 3, when the container holder 20 is moved to the pulled-out position, the end portion 12a is separated from the water outlet 19 of the raw water container 14, and such that, as illustrated in Fig. 1, when the container holder 20 is moved to the received position, the end portion 12a is connected to the water outlet 19 of the raw water container 14.

As illustrated in Fig. 1, the pump attached pipe 10 has a pump 21 attached thereto which transfers drinking water in the pump attached pipe 10 from the side of the lower three-way valve 11 to the side of the upper three-way valve 9. The pump 21 may be, for example, a diaphragm pump. While not shown, the diaphragm pump includes a diaphragm configured to reciprocate, a pump chamber whose capacity increases and decreases according to the reciprocation of the diaphragm, an inlet and an outlet formed in the pump chamber, an inlet side check valve attached to the inlet of the pump chamber to allow drinking water to flow only into the pump chamber, and an outlet side check valve attached to the outlet of the pump chamber to allow drinking water to flow only out of the pump chamber. The diaphragm pump is configured such that while the volume of the pump chamber is increasing due to reciprocation of the diaphragm, drinking water is sucked into the pump chamber through the inlet of the pump chamber, and while the volume of the pump chamber is decreasing due to the reciprocation of the diaphragm, drinking water is discharged from the pump chamber through the outlet of the pump chamber.

Also, the pump 21 may be a gear pump. While not shown, the gear pump includes a casing, a pair of gears received in the casing and meshing with each other, and an inlet chamber and an outlet chamber defined in the casing by the portions of the gears meshing with each other. The gear pump transfers drinking water trapped between the inner surface of the casing and the tooth grooves of the respective gears from the side of the inlet chamber to the side of the outlet chamber due to the rotation of the gears.

A flow sensor 22 is attached to the portion of the pump attached pipe 10 on the outlet side of the pump 21. If the flow of drinking water in the pump attached pipe 10 disappears while the pump 21 is operating, the flow sensor 22 detects this state. At this time, a container replacement lamp (not shown) provided at the front of the casing 1 is turned on so as to inform a user that the raw water container 14 now needs to be replaced by a new raw water container 14.

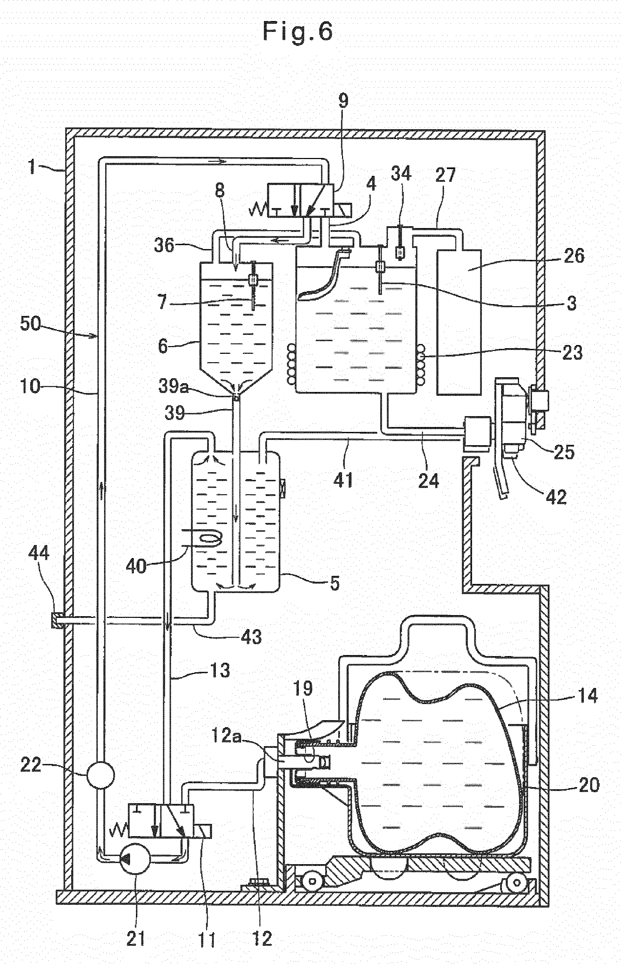

The upper three-way valve 9 can switch the flow of drinking water by moving between a cold water side connection position (see Fig. 1) in which the upper three-way valve 9 allows communication between the pump attached pipe 10 and the cold water tank water supply pipe 4, while blocking communication between the pump attached pipe 10 and the buffer tank water supply pipe 8, and a buffer side connection position (see Fig. 6) in which the upper three-way valve 9 allows communication between the pump attached pipe 10 and the buffer tank water supply pipe 8, while blocking communication between the pump attached pipe 10 and the cold water tank water supply pipe 4. The upper three-way valve 9 is constituted by an electromagnetic valve configured to move from the cold water side connection position to the buffer side connection position when energized, and to move from the buffer side connection position to the cold water side connection position when de-energized.

The lower three-way valve 11 can switch the flow of drinking water by moving between a raw water side connection position (see Fig. 1) in which the lower three-way valve 11 allows communication between the pump attached pipe 10 and the raw water container connection pipe 12, while blocking communication between the pump attached pipe 10 and the circulation pipe 13, and a circulation side connection position (see Fig. 6) in which the lower three-way valve 11 allows communication between the pump attached pipe 10 and the circulation pipe 13, while blocking communication between the pump attached pipe 10 and the raw water container connection pipe 12. The lower three-way valve 11 is, as with the upper three-way valve 9, constituted by an electromagnetic valve configured to move from the raw water side connection position to the circulation side connection position when energized, and to move from the circulation side connection position to the raw water side connection position when de-energized. The lower three-way valve 11 is connected to the hot water tank 5 through the circulation pipe 13.

As illustrated in Fig. 1, the cold water tank 2 contains air and drinking water in two layers with the air forming the upper layer and the water forming the lower layer. The cold water tank 2 has a cooling device 23 attached thereto which keeps drinking water stored in the cold water tank 2 at a predetermined low temperature (about 5 degrees Celsius). A cold water discharge pipe 24 is connected to the bottom surface of the cold water tank 2 such that low-temperature drinking water stored in the cold water tank 2 is discharged through the cold water discharge pipe 24 to outside. The cold water discharge pipe 24 has a cold water cock 25 mounted thereto which is operable from the outside of the casing 1. By opening this cold water cock 25, low-temperature drinking water can be discharged from the cold water tank 2 into a cup, etc. The capacity of the cold water tank 2 (its capacity to hold drinking water) is smaller than that of the raw water container 14, and is about 1 to 3 liters.

As illustrated in Fig. 2, An atmosphere communication line 27 is connected to the top surface 2a of the cold water tank 2 such that the air layer in the cold water tank 2 communicates with the atmosphere through the atmosphere communication line 27 and through an air sterilization chamber 26. The air sterilization chamber 26 includes a hollow case 29 formed with an atmosphere opening 28, and an ozone generator 30 mounted in the case 29. The ozone generator 30 may be, for example, a low-pressure mercury lamp which applies ultraviolet rays to oxygen contained in air so as to change the oxygen into ozone, or a silent electrical discharge device which applies AC voltage between a pair of electrodes opposed to each other and covered with insulators so as to change the oxygen between the electrodes into ozone. The ozone generator 30 is energized at predetermined time intervals to generate ozone so that the interior of the case 29 of the air sterilization chamber 26 is always filled with ozone.

Since the air layer in the cold water tank 2 communicates with the atmosphere through the atmosphere communication line 27, the interior of the cold water tank 2 is maintained at atmospheric pressure. Namely, as the water level in the cold water tank 2 falls, atmospheric air is introduced into the cold water tank 2 from the atmosphere through the air sterilization chamber 26 and the atmosphere communication line 27, thereby maintaining the interior of the cold water tank 2 at atmospheric pressure. At this time, since atmospheric air passes through the air sterilization chamber 26 and thus is sterilized by ozone therein before being introduced into the cold water tank 2, the air in the cold water tank 2 is kept clean. While, in this embodiment, in order to keep the interior of the cold water tank 2 hygienic, the atmosphere communication line 27 includes the air sterilization chamber 26 configured to sterilize air by ozone, a simpler atmosphere communication line 27 may be used instead which comprises an opening for atmosphere communication formed in the top surface 2a of the cold water tank 2, and an air filter attached to this opening.

The first water level sensor 3 is attached to the top surface 2a of the cold water tank 2. Though the first water level sensor 3 may be a sensor capable of detecting a plurality of water levels, the first water level sensor 3 used in this embodiment is a sensor capable of detecting only two states, i.e., the state in which the water level in the cold water tank 2 is below a predetermined level and the state in which the water level is equal to or over the predetermined level. Such a first water level sensor 3 is constituted by, for example, a float 31 having a specific gravity smaller than the drinking water and including a built-in magnet, and a stem 32 retaining the float 31 such that the float 31 is movable in the vertical direction and including a built-in lead switch. This first water level sensor 3 is configured such that when the float 31 moves up and down in synchronization with the rise and fall of the water level in the cold water tank 2, the magnet in the float 31 and the lead switch in the stem 32 move relative to each other, thereby turning on and turning off the lead switch.

The end portion of the cold water tank water supply pipe 4 on the side of the cold water tank 2 is connected to the top surface 2a of the cold water tank 2. The cold water tank 2 is provided in its interior with a guiding plate 33 by which, when drinking water is introduced into the cold water tank 2 through the cold water tank water supply pipe 4, the vertical flow of the drinking water flowing into the cold water tank 2 is changed into a horizontal flow of drinking water. The guiding plate 33 thus prevents low-temperature drinking water stored in the lower portion of the cold water tank 2 from mixing with and being stirred by the normal-temperature drinking water flowing into the cold water tank 2 through the cold water tank water supply pipe 4.

The cold water tank 2 has an abnormality water level sensor 34 mounted thereto separately from the first water level sensor 3. If the water level in the cold water tank 2 reaches an abnormal level, the abnormality water level sensor 34 detects this state. The abnormality water level sensor 34 may be of the type capable of detecting only two states, i.e., the state in which the water level in the cold water tank 2 is below an abnormal level and the state in which the water level is equal to or over the abnormal level. The "abnormal level" is a predetermined water level higher (e.g., by 10 - 20 mm) than the above-mentioned predetermined water level set for the first water level sensor 3. By attaching the abnormality water level sensor 34 in a sensor receiving recess 35 formed in the top surface 2a of the cold water tank 2 as illustrated in the drawings, it is possible to reduce the space in the casing 1 occupied by the cold water tank 2, and thus to make the casing 1 small-sized. The end portion of the atmosphere communication line 27 on the side of the cold water tank 2 is open to the sensor receiving recess 35 so that even if the water level in the cold water tank 2 reaches the abnormal level, it is possible to reliably prevent drinking water from flowing into the atmosphere communication line 27.

The buffer tank 6 contains air and drinking water in two layers with the air forming the upper layer and the water forming the lower layer. The buffer tank 6 is provided separately from the cold water tank 2 so as to have a water level independent of the water level in the cold water tank 2. Namely, the drinking water layers in the buffer tank 6 and the cold water tank 2 never communicate with each other, so that the water levels in the buffer tank 6 and the cold water tank 2 can change separately from each other.

The buffer tank 6 has an air passage pipe 36 connected thereto through which air is allowed to flow into and out of the buffer tank 6. The air passage pipe 36 is connected at one end thereof to the top surface 6a of the buffer tank 6, and at the other end to the top surface 2a of the cold water tank 2, so that the air layers in the buffer tank 6 and the cold water tank 2 communicate with each other through the air passage pipe 36. The air passage pipe 36 is an airtight pipe formed such that air is allowed to flow only between the buffer tank 6 and the cold water tank 2, and not between any other portions, through the air passage pipe 36. The air layer in the buffer tank 6 is in communication with the atmosphere communication line 27 through the interior of the air passage pipe 36 and the air layer in the cold water tank 2. As a result thereof, as the water level in the buffer tank 6 falls, air is introduced into the buffer tank 6 from the cold water tank 2 through the air passage pipe 36, so that the interior of the buffer tank 6 is maintained at atmospheric pressure. At this time, air equal in amount to the air introduced into the buffer tank 6 from the cold water tank 2 is introduced into the cold water tank 2 through the atmosphere communication line 27.

The second water level sensor 7 is attached to the top surface 6a of the buffer tank 6. The second water level sensor 7 is of the type capable of detecting only two states, i.e., the state in which the water level in the buffer tank 6 is below a predetermined level and the state in which the water level is equal to or over the predetermined level. As in the first water level sensor 3, the second water level sensor 7 may be constituted by a float 37 having a specific gravity smaller than the drinking water and including a built-in magnet, and a stem 38 retaining the float 37 such that the float 37 is movable in the vertical direction and including a built-in lead switch. The end portion of the buffer tank water supply pipe 8 on the side of the buffer tank 6 is connected to the top surface 6a of the buffer tank 6.

The capacity of the buffer tank 6 (its capacity to hold drinking water) is smaller than that of the hot water tank 5, and is about 0.2 to 0.5 liters. As described below, drinking water in the buffer tank 6 functions to push the drinking water in the hot water tank 5 to outside when discharging high-temperature drinking water in the hot water tank 5 to outside. Therefore, it is preferable that the buffer tank 6 has a shape elongated in the vertical direction (e.g., cylindrical shape whose height is larger than its diameter). Even if the buffer tank 6 having such a shape has only a small capacity, relatively high water pressure is generated in the lower portion of the buffer tank 6, thus making it possible to effectively push drinking water in the hot water tank 5 to outside.

As illustrated in Fig. 1, the buffer tank 6 is connected to the hot water tank 5 through a hot water tank water supply pipe 39, with the end portion of the hot water tank water supply pipe 39 on the side of the buffer tank 6 connected to the bottom surface of the buffer tank 6. A check valve 39a is provided at the end portion of the hot water tank water supply pipe 39 on the side of the buffer tank 6. The check valve 39a prevents drinking water from flowing into the buffer tank 6 from the hot water tank 5, while allowing drinking water to flow into the hot water tank 5 from the buffer tank 6. By attaching the check valve 39a to the hot water tank water supply pipe 39, it is possible to prevent high-temperature drinking water going up due to heat convection in the hot water tank 5 from flowing into the buffer tank 6, and thus to increase the energy efficiency of the hot water tank 5.

The hot water tank 5 is completely filled with drinking water. The hot water tank 5 has a heater 40 attached thereto which keeps drinking water stored in the hot water tank 5 at a predetermined high temperature (about 90 degrees Celsius).

A hot water discharge pipe 41 is connected to the top surface of the hot water tank 5 such that high-temperature drinking water stored in the upper portion of the hot water tank 5 is discharged to outside through the hot water discharge pipe 41. The hot water discharge pipe 41 has a hot water cock 42 mounted thereto which is operable from the outside of the casing 1. By opening this hot water cock 42, high-temperature drinking water can be discharged from the hot water tank 5 into a cup, etc. When drinking water is discharged from the hot water tank 5, drinking water in the buffer tank 6 is introduced, due to its own weight, into the hot water tank 5 through the hot water tank water supply pipe 39, so that the hot water tank 5 is always filled with drinking water. The capacity of the hot water tank 5 (its capacity to hold drinking water) is about 1 to 2 liters.

The circulation pipe 13, through which the hot water tank 5 communicates with the lower three-way valve 11, is connected at its end portion on the side of the hot water tank 5 to the top surface of the hot water tank 5. A drain pipe 43 is connected to the bottom surface of the hot water tank 5 so as to extend to the exterior of the casing 1. The outlet of the drain pipe 43 is closed by a plug 44. However, an on-off valve may be used instead of the plug 44.

It is now described how the above water dispenser operates.

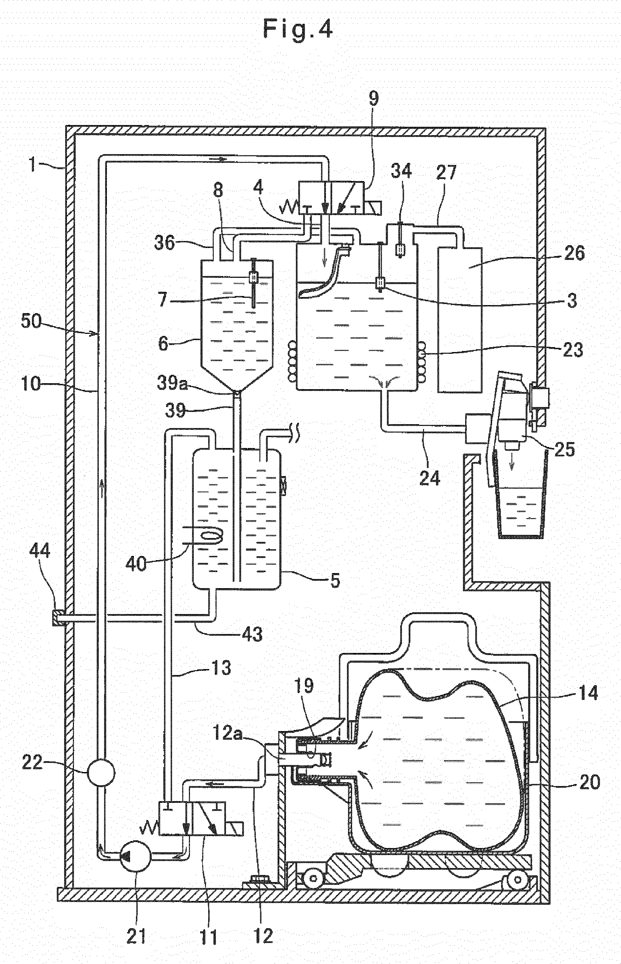

As illustrated in Fig. 4, when a user operates the cold water cock 25, low-temperature drinking water in the cold water tank 2 is discharged, due to its own weight, to outside through the cold water discharge pipe 24. At this time, the water level in the cold water tank 2 falls. When the first water level sensor 3 detects that the water level in the cold water tank 2 has fallen below the predetermined level, the pump 21 is activated with the upper three-way valve 9 moved to the cold water side connection position, and with the lower three-way valve 11 moved to the raw water side connection position. As a result thereof, drinking water contained in the raw water container 14 flows into the cold water tank 2 through the raw water container connection pipe 12, the lower three-way valve 11, the pump attached pipe 10, the upper three-way valve 9, and the cold water tank water supply pipe 4. Thereafter, when the first water level sensor 3 detects that the water level in the cold water tank 2 has reached or exceeded the predetermined level, the pump 21 stops its operation. By activating the pump 21 according to the water level detected by the first water level sensor 3 in this way, it is possible to keep the water level in the cold water tank 2 at a constant level.

Instead of immediately stopping the operation of the pump 21 when the first water level sensor 3 detects that the water level in the cold water tank 2 has reached or exceeded the predetermined level, it is preferable to keep the pump 21 activated for a predetermined time thereafter and then stop the operation of the pump 21. By doing so, it is possible to prevent a chattering phenomenon (phenomenon in which the start and stop of the pump 21's operation are repeated many times in a short time) which tends to occur due to the waving of the water surface in the cold water tank 2. If a sensor capable of detecting a plurality of water levels is used as the first water level sensor 3, the operation of the pump 21 may be stopped when the first water level sensor 3 detects that the water level in the cold water tank 2 has reached a predetermined upper limit.

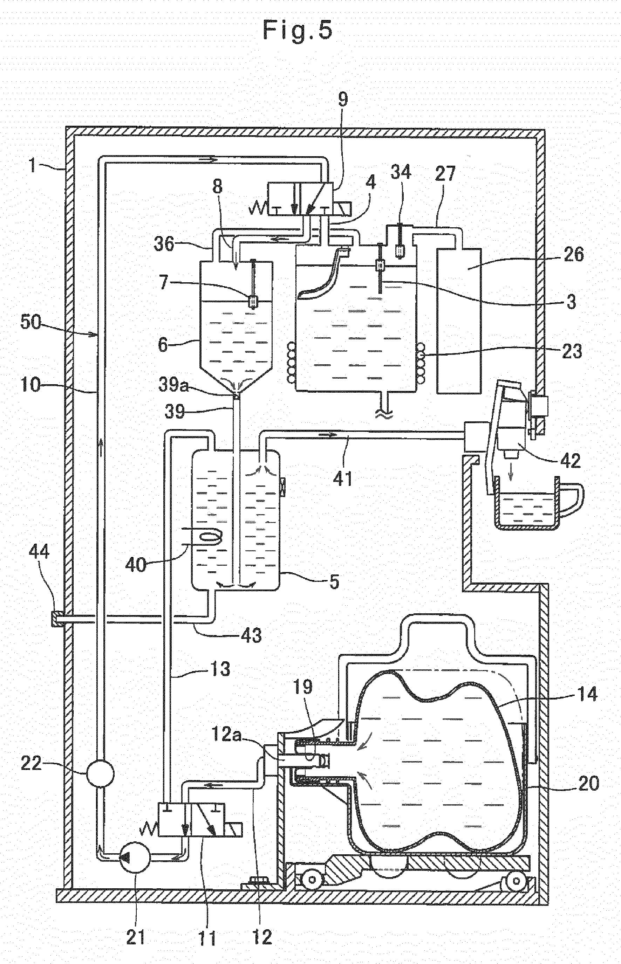

As illustrated in Fig. 5, when a user operates the hot water cock 42, high-temperature drinking water in the hot water tank 5 is discharged to outside through the hot water discharge pipe 41. At this time, drinking water in the buffer tank 6 is introduced, due to its own weight, into the hot water tank 5 through the hot water tank water supply pipe 39. Drinking water in the buffer tank 6 functions to push drinking water in the hot water tank 5 to outside. When drinking water in the buffer tank 6 is introduced into the hot water tank 5, the water level in the buffer tank 6 falls. When the second water level sensor 7 detects that the water level in the buffer tank 6 has fallen below the predetermined level, the pump 21 is activated with the upper three-way valve 9 moved to the buffer side connection position, and with the lower three-way valve 11 moved to the raw water side connection position. As a result thereof, drinking water contained in the raw water container 14 flows into the buffer tank 6 through the raw water container connection pipe 12, the lower three-way valve 11, the pump attached pipe 10, the upper three-way valve 9, and the buffer tank water supply pipe 8. Thereafter, when the second water level sensor 7 detects that the water level in the buffer tank 6 has reached or exceeded the predetermined level, the pump 21 stops its operation. By activating the pump 21 according to the water level detected by the second water level sensor 7 in this way, it is possible to keep the water level in the buffer tank 6 at a constant level.

In this case too, instead of immediately stopping the operation of the pump 21 when the second water level sensor 7 detects that the water level in the buffer tank 6 has reached or exceeded the predetermined level, it is preferable to keep the pump 21 activated for a predetermined time thereafter and then stop the operation of the pump 21. By doing so, it is possible to prevent a chattering phenomenon which tends to occur due to the waving of the water surface in the buffer tank 6. If a sensor capable of detecting a plurality of water levels is used as the second water level sensor 7, the operation of the pump 21 may be stopped when the second water level sensor 7 detects that the water level in the buffer tank 6 has reached a predetermined upper limit.

In this water dispenser, it is possible to conduct sterilization operations so as to keep the interior of the water dispenser hygienic. In such sterilization operations, the circulation path 50 including the buffer tank 6 and the pump attached pipe 10 is sterilized at a high temperature by circulating high-temperature drinking water in the hot water tank 5 through the circulation path 50. The initial sterilization operation starts when a user operates a button (not shown) arranged at the front of the casing 1. The elapsed time from the first sterilization operation is measured by a timer built in the water dispenser, and the second and later sterilization operations are automatically conducted at the intervals of a day based on the elapsed time measured by the timer.

It is now described how the sterilization operations are conducted. As illustrated in Fig. 6, first, the upper three-way valve 9 is moved to the buffer side connection position, and the lower three-way valve 11 is moved to the circulation side connection position. Second, the pump 21 is activated. By doing so, high-temperature drinking water in the hot water tank 5 circulates through the circulation pipe 13, the lower three-way valve 11, the pump attached pipe 10, the upper three-way valve 9, the buffer tank water supply pipe 8, the buffer tank 6, and the hot water tank water supply pipe 39. At this time, the heater 40 of the hot water tank 5 heats drinking water passing through the hot water tank 5, thereby increasing the temperature of the entire drinking water circulating through the circulation path 50 (flow path constituted by the hot water tank 5, the circulation pipe 13, the lower three-way valve 11, the pump attached pipe 10, the upper three-way valve 9, the buffer tank water supply pipe 8, the buffer tank 6, and the hot water tank water supply pipe 39) up to a sterilization temperature (e.g., 80 degrees Celsius).

During the sterilization operations, high-temperature drinking water never passes through the cold water tank 2. Therefore, it is possible to secure safety and convenience for a user. Namely, if high-temperature drinking water passes through the cold water tank 2 during the sterilization operations, since the high-temperature drinking water is discharged out of the cold water cock 25 when a user operates the cold water cock 25 during the sterilization operations, there is the risk that the user might get scalded. In contrast thereto, since this water dispenser is configured such that the cold water tank 2 is not disposed in the circulation path 50 used during the sterilization operation, a user can discharge low-temperature drinking water from the cold water tank 2 even during the sterilization operations, and there is no risk that the user might get scalded.

After the above water dispenser is used for a long period of time, the first water level sensor 3, the second water level sensor 7, the upper three-way valve 9, or the lower three-way valve 11, etc. might fail to function properly. In particular, if natural mineral water containing natural minerals is used as drinking water, the separation of such minerals from drinking water might inhibit the movement of the float 31 of the first water level sensor 3 or the float 37 of the second water level sensor 7, or might make it difficult for the upper three-way valve 9 or the lower three-way valve 11 to move from one of the two connection positions to the other connection position. If such an abnormality occurs and is not detected, the water level in the cold water tank 2 or in the buffer tank 6 might continue to rise, so that water might leak out of the water dispenser.

In order to avoid this problem, this water dispenser is configured such that if the abnormality water level sensor 34 detects abnormality due to malfunction of the first water level sensor 3, the second water level sensor 7, the upper three-way valve 9, the lower three-way valve 11, or any other element, the pump 21 is deactivated, a lamp (not shown) arranged at the front of the casing 1 is turned on to inform a user that an abnormality is occurring. This is described below.

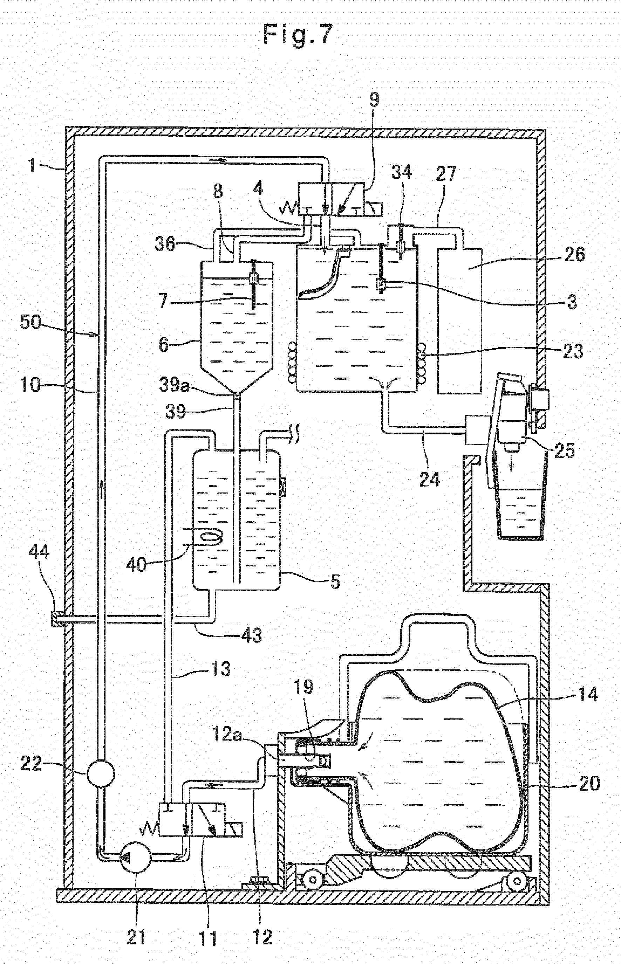

In Fig. 7, a case is envisaged in which the first water level sensor 3 fails to function properly such that though the pump 21 is operating according to the fall of the water level in the cold water tank 2, the float 31 of the first water level sensor 3 does not move up. At this time, since the first water level sensor 3 does not detect the rise of the water level in the cold water tank 2, the pump 21 does not stop its operation even when the water level in the cold water tank 2 has reached or exceeded the predetermined level, so that the water level in the cold water tank 2 continues to rise. Thereafter, when the water level in the cold water tank 2 has reached the abnormal level, the abnormality water level sensor 34 detects this state. At this time, the operation of the pump 21 is stopped, and further the lamp is turned on so as to inform a user that an abnormality is occurring. In this way, it is possible to prevent the water leakage due to the malfunction of the first water level sensor 3.

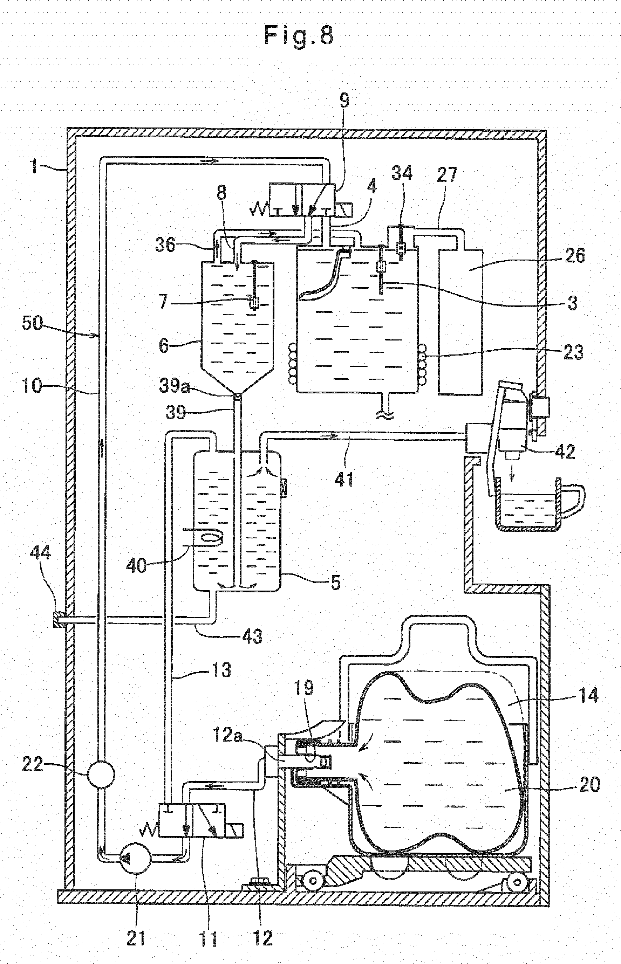

In Fig. 8, a case is envisaged in which the second water level sensor 7 fails to function properly such that though the pump 21 is operating according to the fall of the water level in the buffer tank 6, the float 37 of the second water level sensor 7 does not move up. At this time, since the second water level sensor 7 does not detect the rise of the water level in the buffer tank 6, the pump 21 does not stop its operation even when the water level in the buffer tank 6 has reached or exceeded the predetermined level, so that the water level in the buffer tank 6 continues to rise. Thereafter, when the water level in the buffer tank 6 has reached the top surface 6a of the buffer tank 6, drinking water overflowing the buffer tank 6 flows into the cold water tank 2 through the air passage pipe 36, so that the water level in the cold water 2 begins to rise. Thereafter, when the water level in the cold water tank 2 has reached the abnormal level, the abnormality water level sensor 34 detects this state. At this time, the operation of the pump 21 is stopped, and the lamp is turned on so as to inform a user that an abnormality is occurring. In this way, it is possible to prevent the water leakage due to the malfunction of the second water level sensor 7.

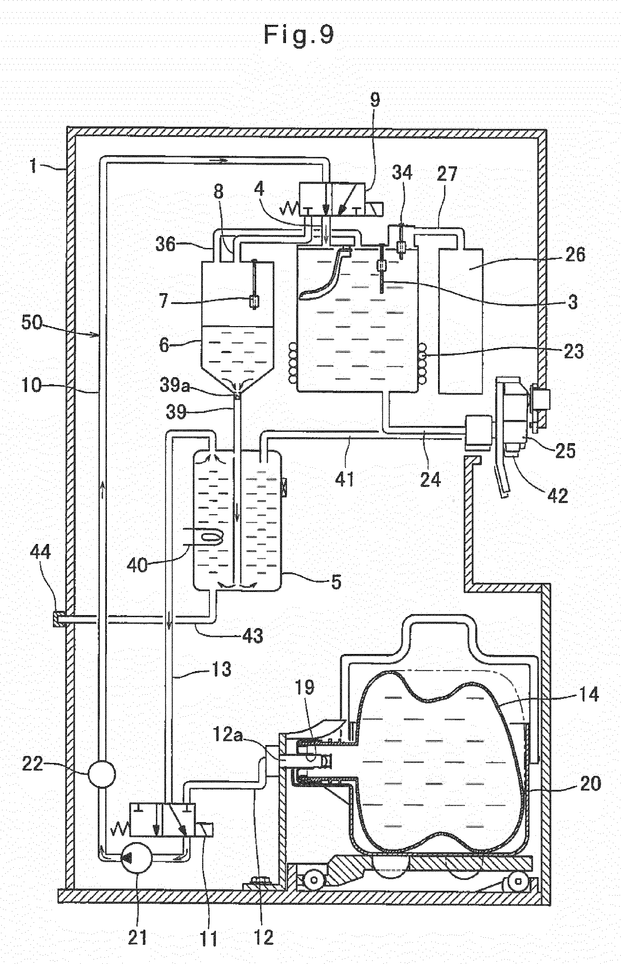

In Fig. 9, a case is envisaged in which the upper three-way valve 9 fails to function properly such that when the sterilization operation is started, the upper three-way valve 9 does not move from the cold water side connection position to the buffer side connection position. At this time, since drinking water flowing out of the buffer tank 6, which is supposed to return to the buffer tank 6, flows into the cold water tank 2 instead, the water level in the buffer tank 6 continues to fall due to the operation of the pump 21, and the water level in the cold water tank 2 continues to rise. Thereafter, when the water level in the cold water tank 2 has reached the abnormal level, the abnormality water level sensor 34 detects this state. At this time, the operation of the pump 21 is stopped, and the lamp is turned on so as to inform a user that an abnormality is occurring. In this way, it is possible to prevent the water leakage due to the malfunction of the upper three-way valve 9.

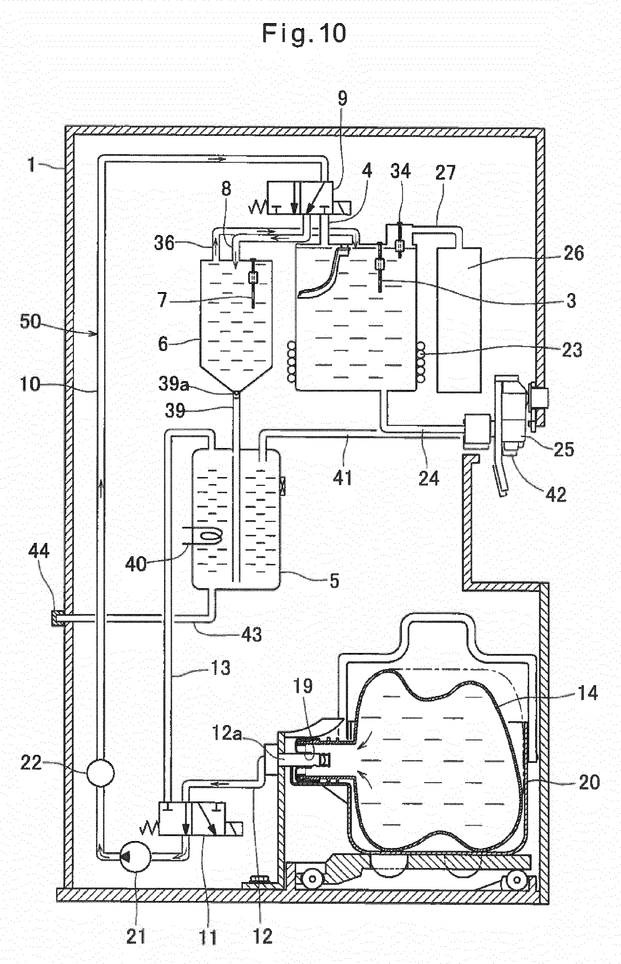

In Fig. 10, a case is envisaged in which the lower three-way valve 11 fails to function properly such that when the sterilization operation is started, the lower three-way valve 11 does not move from the raw water side connection position to the circulation side connection position. At this time, drinking water which is supposed to circulate through the circulation path 50 remains stationary, while additional drinking water flows into the circulation path 50 from the raw water container 14, so that the water level in the buffer tank 6 continues to rise due to the operation of the pump 21. Thereafter, when the water level in the buffer tank 6 has reached the top surface 6a of the buffer tank 6, drinking water overflowing the buffer tank 6 flows into the cold water tank 2 through the air passage pipe 36, so that the water level in the cold water 2 begins to rise. Thereafter, when the water level in the cold water tank 2 has reached the abnormal level, the abnormality water level sensor 34 detects this state. At this time, the operation of the pump 21 is stopped, and the lamp is turned on so as to inform a user that an abnormality is occurring. In this way, it is possible to prevent the water leakage due to the malfunction of the lower three-way valve 11.

As described above, in this water dispenser, even if the water level in the cold water tank 2 continues to rise due to an abnormality, the abnormality water level sensor 34 can detect the abnormality. Also, since the interior of the cold water tank 2 communicates with the interior of the buffer tank 6 through the air passage pipe 36, even if the water level in the buffer tank 6 continues to rise due to an abnormality, drinking water overflowing the buffer tank 6 flows into the cold water tank 2 through the air passage pipe 36, so that the water level in the cold water 2 rises. Therefore, even if the water level in the buffer tank 6 continues to rise due to an abnormality, the abnormality water level sensor 34 can detect the abnormality. Namely, the abnormality water level sensor 34 of the cold water tank 2 can detect not only an abnormality which causes the water level in the cold water tank 2 to continue to rise, but also an abnormality which causes the water level in the buffer tank 6 to continue to rise, thus making it possible to monitor both the cold water tank 2 and the buffer tank 6 by a single sensor, i.e., only by the abnormality water level sensor 34. As a result thereof, it is not necessary to attach an abnormality water level sensor to the buffer tank 6, thus making it possible to reduce costs. Also, since the air layer in the cold water tank 2 communicates with the air layer in the buffer tank 6 through the air passage pipe 36, it is not necessary to mount an atmosphere communication line to the buffer tank 6. As a result thereof, it is possible to reduce the possibility that germs might go into the water dispenser from the atmosphere, and thus to keep the water dispenser hygienic.

In the above embodiment, the water dispenser is described in which the first water level sensor 3 is attached to the cold water tank 2, and the second water level sensor 7 is attached to the buffer tank 6. However, the present invention may be applied to a water dispenser of a different type. For example, the first and second water level sensors may be attached, respectively, to the cold water tank and to the hot water tank, the tanks each containing air and drinking water in two layers with the air forming the upper layer and the water forming the lower layer. In this arrangement, the atmosphere communication line can be attached to the cold water tank, the air passage pipe can be attached such that the air layer in the cold water tank communicates with the air layer in the hot water tank through the air passage pipe, and the abnormality water level sensor can be attached to the cold water tank.

### DESCRIPTION OF REFERENCE NUMERALS

2: cold water tank
3: first water level sensor
4: cold water tank water supply pipe
5: hot water tank
6: buffer tank
7: second water level sensor
8: buffer tank water supply pipe
9: upper three-way valve
10: pump attached pipe
11: lower three-way valve
12: raw water container connection pipe
13: circulation pipe
14: raw water container
27: atmosphere communication line
34: abnormality water level sensor
36: air passage pipe

## Claims

1. A water dispenser comprising:
a first tank (2) containing air and drinking water in two layers with the air forming an upper layer and the water forming a lower layer;
a first water level sensor (3) configured to detect a water level in the first tank (2);
a first water supply pipe (4) configured such that when the water level detected by the first water level sensor (3) has fallen, drinking water is introduced into the first tank (2) through the first water supply pipe (4);
a second tank (6) containing air and drinking water in two layers with the air forming an upper layer and the water forming a lower layer, and provided separately from the first tank (2) so as to have a water level independent of the water level in the first tank (2);
a second water level sensor (7) configured to detect the water level in the second tank (6);
a second water supply pipe (8) configured such that when the water level detected by the second water level sensor (7) has fallen, drinking water is introduced into the second tank (6) through the second water supply pipe (8);
an atmosphere communication line (27) mounted to the first tank (2) such that an interior of the first tank (2) is maintained at atmospheric pressure;
an air passage pipe (36) through which the air layer in the first tank (2) communicates with the air layer in the second tank (6); and
an abnormality water level sensor (34) configured to detect that the water level in the first tank (2) has reached an abnormal level.

2. The water dispenser according to claim 1, further comprising a hot water tank (5) in which high-temperature drinking water to be discharged to outside is to be stored,
wherein the first tank (2) comprises a cold water tank in which low-temperature drinking water to be discharged to outside is to be stored, and
wherein the second tank (6) comprises a buffer tank arranged at a higher level than the hot water tank (5), and configured to store drinking water which is capable of pushing high-temperature drinking water in the hot water tank (5) to outside when the high-temperature drinking water in the hot water tank (5) is discharged to outside.

3. The water dispenser according to claim 2, further comprising:
a pump attached pipe (10) connected to upstream sides of the first water supply pipe (4) and the second water supply pipe (8) through an upper three-way valve (9);
a raw water container connection pipe (12) and a circulation pipe (13) connected to an upstream side of the pump attached pipe (10) through a lower three-way valve (11); and
a replaceable raw water container (14) connected to the raw water container connection pipe (12),
wherein the hot water tank (5) is connected to the circulation pipe (13),
wherein the upper three-way valve (9) is configured to switch a flow of drinking water by moving between a first connection position in which the upper three-way valve (9) allows communication between the pump attached pipe (10) and the first water supply pipe (4), while blocking communication between the pump attached pipe (10) and the second water supply pipe (8), and a second connection position in which the upper three-way valve (9) allows communication between the pump attached pipe (10) and the second water supply pipe (8), while blocking communication between the pump attached pipe (10) and the first water supply pipe (4), and
wherein the lower three-way valve (11) is configured to switch a flow of drinking water by moving between a raw water side connection position in which the lower three-way valve (11) allows communication between the pump attached pipe (10) and the raw water container connection pipe (12), while blocking communication between the pump attached pipe (10) and the circulation pipe (13), and a circulation side connection position in which the lower three-way valve (11) allows communication between the pump attached pipe (10) and the circulation pipe (13), while blocking communication between the pump attached pipe (10) and the raw water container connection pipe (12).
